# EUROPÄISCHE PATENTANMELDUNG

(11) **EP 1 429 436 A2**
(43) Veröffentlichungstag der Anmeldung: **16.06.2004**
(21) Anmeldenummer: 03028490.5
(22) Anmeldetag: 12.12.2003
(51) Int. Cl.: H02G 3/04

(54) **Brandgeschützter Kabelkanal und Verfahren zur Herstellung desselben**

(30) Priorität: 12.12.2002 DE 10258171; 31.01.2003 DE 10303943
(71) Anmelder: Thomas, Werner, 82069 Hohenschäftlarn (DE)
(72) Erfinder: Thomas, Werner, 82069 Hohenschäftlarn (DE)
(74) Vertreter: Kirschner, Klaus Dieter, Dipl.-Phys.

(57) **Zusammenfassung**

Ein brandgeschützter Kabelkanal umfasst eine Kabelrinne (6,66), die eine Außenwand aus mit Öffnungen versehenem Metallblech, eine Brandschutz-Lage aus einem innenseitig von der Außenwand angeordneten, nichtmetallischen Brandschutzmaterial und eine innenseitig von der Brandschutz-Lage angeordnete Innenwand aus mit Öffnungen versehenem Metallblech aufweist, und einen Deckel (4,64), der eine Deckel-Außenwand aus mit Öffnungen versehenem Metallblech, eine Brandschutz-Lage aus einem innenseitig von der Deckel-Außenwand angeordneten, nichtmetallischen Brandschutzmaterial und eine innenseitig von der Brandschutz-Lage angeordnete Deckel-Innenwand aus mit Öffnungen versehenem Metallblech aufweist. Der Kabelkanal wird durch Zusammenfügen der Außenwände und der Innenwände in Sandwich-Bauweise hergestellt.

## Beschreibung

Die Erfindung betrifft einen brandgeschützten Kabelkanal.

Kabelkanalsysteme sind in unterschiedlicher Weise aus dem Stand der Technik bekannt. Sie können aus verschiedenen Materialien, wie Kunststoffen oder Metallen bestehen. Bei höheren Belastungen werden dabei überwiegend Elemente aus Metall zum Einsatz kommen. Die Kabelkanalsysteme bestehen aus Systemelementen, wie geraden Stücken, Bogenstücken, Kreuzungen, Abzweigstücken, Endstücken und dergleichen und aus Vorrichtungen zum Befestigen dieser Elemente an Wänden und Decken, um mit diesen Elementen ein System aus Kabelkanälen, das für den speziellen Anwendungsfall geeignet ist, zusammenzusetzen. Vorzugsweise werden als Systemelemente Metallprofile, die aus Gründen der Gewichtsund Materialersparnis eine Vielzahl von Öffnungen aufweisen, verwendet.

Solche Kabelkanäle bieten im Brandfall keinen Brandschutz für die darin geführten Kabel, da das häufig verwendete Metall ein guter Wärmeleiter ist und da die Kabel nicht von der Umgebung abgeschlossen sind, weil in den Metallprofilen gewöhnlich Löcher insbesondere zur Gewichtsreduzierung vorgesehen sind. In feuergefährdeten Räumen werden die Kabelkanäle daher zusätzlich mit einer Brandschutzverkleidung aus Brandschutzplatten umbaut, die aus einem feuerfesten oder feuerhemmenden Material besteht. Diese Verkleidung wird, nachdem das Kabelkanalsystem aus seinen einzelnen Systemteilen zusammengebaut und befestigt wurde, um dieses System außen herum angebracht. Dies ist ein mühsames und sehr arbeitsaufwendiges Verfahren. Außerdem macht die zusätzliche Verkleidung den Kabelkanal recht voluminös. Auch im Falle einer Inspektion der darin geführten Kabel muß diese Verkleidung zuerst wieder entfernt werden. In der Praxis wird das Kabelkanalsystem von einer Elektrofirma installiert, und die Brandschutzverkleidung wird von einer Brandschutzfachfirma nach der Verlegung der Elektrokabel durchgeführt, so daß tatsächlich zwei Fachfirmen beteiligt sind, um den Kabelkanal zu installieren. Dies ist nicht nur kostspielig, sondern gibt auch Probleme bei der Gewährleistungsfrage, weil zwei Firmen an der Erstellung des Brandschutz-Kabelsystems beteiligt sind.

Aus der DE 100 43 355 ist ein Kabelkanal bekannt, der aus einem Verbundwerkstoff gebildet ist, der aus einem nichtmetallischen Brandschutzmaterial besteht, das mit einer Metalleinlage verstärkt ist. Im Fall des Einwirkens von Hitze und/oder Feuer schützt das Brandschutzmaterial die Systemelemente des Kabelkanals und die im Kabelkanalsystem geführten Kabel vor der einwirkenden Hitze und/oder den Flammen, während die Metalleinlage für die mechanische Festigkeit des Kabelkanals sorgt. Der Kabelkanal kommt ohne eine gesonderte Umhüllung im Falle eines Brandes oder einer anderweitigen Hitzeeinwirkung aus und schützt in den Kabelkanal geführten Kabel. Andererseits erfordert die Verwendung des Verbundwerkstoffes, dass nicht alle Kunststoffe und sonstige Brandschutzmaterialien eingesetzt werden können außer solchen Kunststoffen, die sich zur Herstellung des Verbundwerkstoffes eignen. Da die Kunststoffoberfläche auf der Innenseite des Kabelkanals frei liegt, ist auch eine Beschädigung der Kunststoffschicht, das heißt des Brandstoffmaterials, insbesondere an solchen Stellen zu befürchten, an denen der Kabelkanal eine Biegung macht, weil dort eine mechanische Belastung des Brandschutzmaterials besonders beim Einziehen der Kabel auftritt.

Dem gegenüber liegt der Erfindung die Aufgabe zugrunde, einen brandgeschützten Kabelkanal bereitzustellen, bei dem eine freiere Auswahl der Brandschutzmittel zur flexiblen Abstimmung der Brandschutzeigenschaften auf die jeweiligen Erfordernisse gegeben ist und bei dem auch die mechanische Beanspruchung des Brandschutzmittels bei den Verlegearbeiten und im Betrieb unproblematisch ist.

Zur Lösung dieser Aufgabe ist der brandgeschützte Kabelkanal, der eine Kabelrinne und gegebenenfalls einen Deckel umfasst, dadurch gekennzeichnet, daß wenigstens die Kabelrinne eine Außenwand aus mit Öffnungen versehenem Metallblech, eine Brandschutz-Lage aus einem innenseitig von der Außenwand angeordneten, nichtmetallischen Brandschutzmaterial und eine innenseitig von der Brandschutz-Lage angeordnete Innenwand aus mit Öffnungen versehenem Metallblech aufweist. Durch diesen einfachen Aufbau, bei dem das intumeszierende Brandschutzmaterial zwischen zwei Metallblechen angeordnet ist, wird einerseits die Herstellung des Kabelkanals vereinfacht und andererseits ist eine freie Materialwahl für das Brandschutzmaterial möglich, da dieses weder mit dem Metallblech verbunden werden muss wie bei dem Verbundmaterial noch eine mechanische Stabilität haben muss, da es durch die Metallbleche der Außenwand und der Innenwand gehalten wird. Beim Einziehen der Kabel in den Kabelkanal und auch beim Austauschen oder Hinzufügen von Kabeln ist das Brandschutzmaterial durch die Innenwand aus Metall geschützt, so dass das Brandschutzmaterial über einen lange Zeit hinweg voll funktionsfähig zur Verfügung steht.

Eine vorteilhafte Ausgestaltung des erfindungsgemäßen Kabelkanals mit Kabelrinne und Deckel ist dadurch gekennzeichnet, daß der mit der Kabelrinne lösbar verbundenen Dekkel eine Deckel-Außenwand aus mit Öffnungen versehenem Metallblech, eine Brandschutz-Lage aus einem innenseitig von der Außenwand angeordneten, nichtmetallischen Brandschutzmaterial und eine innenseitig von der Brandschutz-Lage angeordnete Deckel-Innenwand aus mit Öffnungen versehenem Metallblech aufweist. Prinzipiell könnte die Kabelrinne auch ohne Deckel zum Einsatz kommen. Es ist jedoch vorteilhaft, wenn der Kabelkanal mit einem Deckel ausgestattet ist, weil dadurch die Nachbelegung des Kabelkanals vereinfacht wird. In diesem Fall ist es vorteilhaft, wenn auch der Deckel in der selben Weise aufgebaut ist wie die Kabelrinne, so dass ein Rundum-Brandschutz gewährleistet wird.

Eine weitere vorteilhafte Ausgestaltung des erfindungsgemäßen Kabelkanals ist dadurch gekennzeichnet, dass die Außenwand der Kabelrinne als tragendes Element für den Kabelkanal ausgeführt ist, während die Innenwand als Abriebschutz für das Brandschutzmaterial vorgesehen ist. Wenn die Außenwand des Kabelkanals als tragendes Bauteil ausgeführt ist, hat es auch aufgrund der entsprechenden Dicke des Metallblechs eine erhöhte mechanische Festigkeit, so dass der Kabelkanal gegen eine Schlagbeanspruchung von Außen oder eine andere mechanische Beanspruchung hinreichend geschützt ist und das Brandschutzmaterial nicht in Mitleidenschaft gezogen wird. Die Innenwand kann dagegen mit einem dünneren Metallblech ausgeführt sein, wobei sie auch dann ihre Aufgabe erfüllt, das Brandschutzmaterial gegen einen Abrieb von den Kabeln zu schützen.

Eine vorteilhafte Ausgestaltung des erfindungsgemäßen Kabelkanals ist dadurch gekennzeichnet, daß das Brandschutzmaterial wasserhaltiges Natriumsilicat enthält, das im Brandfall unter Wärmeeinwirkung gebundenes Wasser zur Kühlung freigibt. Der Aufbau des Kabelkanals ermöglicht auch den Einsatz von wasserhaltigem Natriumsilicat als Brandschutzmittel, da die Außen- und Innenwände des Kabelkanals das Material an der gewünschten Stelle halten kann.

Eine vorteilhafte Ausgestaltung des erfindungsgemäßen Kabelkanals ist dadurch gekennzeichnet, daß vorstehende Brandschutzmaterial in Form des Glasgewebes lose zwischen den Außenwänden und den Innenwänden eingelegt ist.

Eine vorteilhafte Ausgestaltung des erfindungsgemäßen Kabelkanals ist dadurch gekennzeichnet, daß das Brandschutzmaterial eine Acrylat/Polysiloxandispersion oder PY-ROSTAT® UNI oder PALUSOL® oder ein beschichtetes Glagewebe oder eine Vinylazetat-Mischpolymer-Dispersion auf Wasserbasis mit flammhemmenden Füllstoffen oder NOVAFLEX ® Material aufweist.

Bei PALUSOL® handelt es sich um einen nicht brennbaren Baustoff (Baustoff-klasse DIN 4102-A2) nach DIN 4102-A1, welcher von der Firma BASF-Aktiengesellschaft hergestellt wird und eine allgemeine bauaufsichtige Zulassung (Nr.Z-19.11-14) besitzt. Dieses Brandschutzmaterial steht bereits in Plattenform zur Verfügung und besteht aus wasserhaltigem Natriumsilicat und Stapelglasseide. Dieses Brandschutzmaterial schäumt bei Wärmeeinfluß auf und bildet dann den gewünschten Brandschutz.

Eine vorteilhafte Ausgestaltung des erfindungsgemäßen Kabelkanals ist dadurch gekennzeichnet, daß Brandschutzmaterial in Form der Brandschutzplatten lose zwischen den Außenwänden und den Innenwänden eingelegt ist. Da die PALUSOL® Brandschutzplatten bereits als Platten vorliegen lassen sie sich besonders einfach in dem Kabelkanal zwischen der Innenwand und der Außenwand der Kabelrinne bzw. des Deckels anordnen. Die Platten haben genügend eigene Stabilität, so dass keine weitere Verbindung zwischen beispielsweise den Brandschutzplatten und der Innenseite der Außenwand der Kabelrinne erforderlich ist.

Eine vorteilhafte Ausgestaltung des erfindungsgemäßen Kabelkanals ist dadurch gekennzeichnet, daß das Brandschutzmaterial Brandschutzplatten, vorzugsweise aus VERMI-CULITE® oder Steinfaserplatten mit einer Schmelztemperatur größer oder gleich 1000°C oder Caluzium-Silikat-Platten oder Platten aus einem schaumbildenden Dümmstoff auf Polyurethan-Basis mit Füllstoffen aufweist. Die vorstehenden Materielien haben auch Vorteile im Hinblick auf das Gesamtgewicht des Kabelkanals, und das Gewicht ist ein erheblicher Gesichtspunkt bei derartigen Brandschutzkanälen.

Eine vorteilhafte Ausgestaltung des erfindungsgemäßen Kabelkanals ist dadurch gekennzeichnet, daß das Brandschutzmaterial Brandschutzplatten aufweist, die aus wenigstens zwei Lagen aus im Bezug auf ihr Brandschutzverhalten unterschiedlichen Brandschutzmaterialien bestehen. Damit kann das Brandschutzverhalten des Kabelkanals besser auf verschiedene Brandfälle abgestimmt werden.

Eine vorteilhafte Ausgestaltung des erfindungsgemäßen Kabelkanals ist dadurch gekennzeichnet, daß die Brandschutzplatten aus zwei Lagen aus im Bezug auf ihr Brandschutzverhalten unterschiedlichen Brandschutzmaterialien bestehen, wobei wenigstens eine Wärmedämmungs-Lage mit hohen Wärmedämmungseigenschaften, vorzugsweise aus Vermiculite oder Steinfaser, und wenigstens eine Schaumbildungs-Lage mit hoher Schaumbildung bei Hitzeeinfluß, vorzugsweise aus PALUSOL® oder einem Dämmstoff auf Polyurethan-Basis, vorgesehen ist. So kann beispielsweise bei einer plötzlich auftretenden hohen Hitzebelastung die Einwirkung der Hitze auf die Schaumbildungs-Lage verzögert werden, sodass diese sich unter Zeitverzug und geringeren Temperaturgradienten eine sich ständig weiter aufbauende Schaumlage entwickeln kann, bevor die Hitze voll durch die Brandschutzschicht durchschlägt.

Eine vorteilhafte Ausgestaltung des erfindungsgemäßen Kabelkanals ist dadurch gekennzeichnet, daß zum Schutz des Kabelkanalinhalts gegen Feuer von außen die Wärmedämmungs-Lage mit hohe Wärmedämmungseigenschaften an der Innenseite der Außenwand des Kabelkanals und die Schaumbildungs-Lage innerhalb der Wärmedämmungs-Lage angeordnet ist, wobei beim Aufschäumen des Brandschutzmaterials Schaum durch die Öffungen der Innenwand des Kabelkanals nach innen in den Kabelkanal austritt, sodass sich beim Aufschäumen des intumeszierenden Materials eine Isolier-Schaumlage mit hoher Dämmwirkung innerhalb der Kanalwandung zum weiteren Temperaturabbau aufbauen kann, und dass zum Schutz des Kabelkanalinhalts gegen Feuer von innen die Wärmedämmungs-Lage mit hohen Wärmedämmungseigenschaften an der Außenseite der Innenwand des Kabelkanals und die Schaumbildungs-Lage außerhalb der Wärmedämmungs-Lage angeordnet ist, wobei beim Aufschäumen des Brandschutzmaterials Schaum durch die Öffungen der Au0ßenwand des Kabelkanals nach außen austritt, sodass sich beim Aufschäumen des intumeszierenden Materials eine Isolier-Schaumlage mit hoher Dämmwirkung außerhalb der Kanalwandung zum weiteren Temperaturabbau aufbauen kann. Damit wird das Zusammenwirken der Schaumbildungs-Lage mit der Wärmedämmungs-Lage auf den jeweiligen Brandschutz-Kabelkanaltryp eingestellt und es ist einBrandschutz bei Brandtemperaturen von beispielsweise 1000°C gewährleistet.

Eine vorteilhafte Ausgestaltung des erfindungsgemäßen Kabelkanals ist dadurch gekennzeichnet, daß die Brandschutzplatten aus drei Lagen aus im Bezug auf ihr Brandschutzverhalten unterschiedlichen Brandschutzmaterialien bestehen, wobei eine Wärmedämmungs-Lage mit hohen Wärmedämmungseigenschaften zwischen zwei Schaumbildungs-Lagen mit hoher Schaumbildung bei Hitzeeinfluß angeordnet ist. Damit ist ein und der selbe Brandschutz-Kabelkanal gegen Feuer von außen und gegen Feuer von innen bei Brandtemperaturen von beispielsweise 1000°C brandgeschützt.

Eine vorteilhafte Ausgestaltung des erfindungsgemäßen Kabelkanals ist dadurch gekennzeichnet, daß die Außenwände durch Rastmittel mit den Innenwänden zu verbinden sind. Indem die Außenwände mit den Innenwänden verrastet werden können, ist ein besonders einfacher Zusammenbau der Kabelrinnen möglich, die dann fertig angeliefert und vor Ort von einer Elektrofachfirma eingebaut werden kann.

Eine vorteilhafte Ausgestaltung des erfindungsgemäßen Kabelkanals ist dadurch gekennzeichnet, daß die Rastmittel an Außenrändern der Außenwände und der Innenwände vorgesehen sind. Da die Verrastung an den Außenrändern der Außenwände und der Innenwände erfolgt, wird das Brandschutzmaterial, welches sich zwischen den Wänden befindet, durch die Befestigung der Wände untereinander nicht beeinträchtigt.

Eine vorteilhafte Ausgestaltung des erfindungsgemäßen Kabelkanals ist dadurch gekennzeichnet, daß die Außenwand einen nach innen verlaufenden Rand aufweist, dass die Innenwand einen nach außen unter den Rand der Außenwand verlaufenden Randansatz aufweisen, und dass die Schweißungen zwischen dem Rand der Außenwand und dem Randansatz der Innenwand angeordnet sind.

Eine vorteilhafte Ausgestaltung des erfindungsgemäßen Kabelkanals ist dadurch gekennzeichnet, daß die Innenwand zwei Seitenwände und eine Bodenwand aufweisen, und dass die Seitenwände in einem Bereich eines zwischen den Seitenwänden und der Bodenwand gebildeten Stoßes mit der Bodenwand und mit der Außenwand verbunden, vorzugsweise vernietet oder verschweißt sind.

Eine vorteilhafte Ausgestaltung des erfindungsgemäßen Kabelkanals ist dadurch gekennzeichnet, daß eine der zwei Seitenwände der Innenwand mit der Bodenwand einstückig ist.

Eine vorteilhafte Ausgestaltung des erfindungsgemäßen Kabelkanals ist dadurch gekennzeichnet, dass als Brandschutz-Lage Brandschutzplatten vorgesehen sind, dass die Brandschutzplatten, die in den Seitenwänden des Kabelkanals vorgesehen sind, sich im wesentlichen über die gesamte Länge der Seitenwände erstrecken, dass die Brandschutzplatten, die in dem Boden des Kabelkanals vorgesehen sind, sich im wesentlichen zwischen den Brandschutzplatten in den Seitenwänden erstrecken, dass wenigstens einer der zwei Seitenwände um die Brandschutzplatte am Boden des Kabelkanals herum geführt ist und neben dem Boden des Kabelkanals verläuft, dass die Bodenwand an dem Stoß zu der genannten Seitenwand ebenfalls um die Brandschutzplatte am Boden des Kabelkanals herum geführt ist und neben dem Boden des Kabelkanals verläuft, und dass die Seitenwand und die Bodenwand miteinander und mit der Außenwand verbunden sind.

Eine vorteilhafte Ausgestaltung des erfindungsgemäßen Kabelkanals ist dadurch gekennzeichnet, daß als Brandschutz-Lage Brandschutzplatten vorgesehen sind, dass die Brandschutzplatten, die in dem Boden des Kabelkanals vorgesehen sind, sich im wesentlichen über die gesamte Länge des Bodens erstrecken, dass die Brandschutzplatten, die in den Seitenwänden des Kabelkanals vorgesehen sind, sich im wesentlichen zwischen den Brandschutzplatten in dem Boden und den gegenüberliegenden Enden der Seitenwände erstrecken, dass wenigstens einer der zwei Seitenwände um die Brandschutzplatte am Boden des Kabelkanals herum geführt ist und neben dem Boden des Kabelkanals verläuft, dass die Bodenwand an dem Stoß zu der genannten Seitenwand ebenfalls um die Brandschutzplatte am Boden des Kabelkanals herum geführt ist und neben dem Boden des Kabelkanals verläuft, und dass die Seitenwand und die Bodenwand miteinander um d mit der Außenwand verbunden sind.

Eine vorteilhafte Ausgestaltung des erfindungsgemäßen Kabelkanals ist dadurch gekennzeichnet, daß die Öffnungen in den Außenwänden und in den Innenwänden so dimensioniert sind, daß siebeim Aufschäumen des Brandschutzmaterials den Schaum austreten lassen. So kann sich beim Aufschäumen des intumeszierenden Materials eine Isolier-Schaumlage außerhalb der Kanalwandung zum weiteren Temperaturabbau aufbauen kann. So wird ein Wirkamer Rundum-Brandschutz erreicht.

Eine vorteilhafte Ausgestaltung des erfindungsgemäßen Kabelkanals ist dadurch gekennzeichnet, daß das Brandschutzmaterial eine Dicke von bis zu einigen Millimetern aufweist. Die Dicke des Brandschutzmaterials richtet sich selbstverständlich auch nach dem verwendeten Material und der gewünschten, klassifizierten Feuerwiderstandsdauer, beispielsweise 30, 60 oder 90 Minuten.

Insgesamt liefert die vorliegende Erfindung einen Kabelkanal, der einen zuverlässigen Schutz des Systems selbst und der im System geführten Kabel gegenüber der Einwirkung von Feuer und von Hitze gewährleistet. Die einzelnen Systemelemente entsprechen in ihren Abmessungen und Ausgestaltungen im wesentlichen den aus üblichen Kabelkanalsystemen bekannten Systemelementen und können deswegen ebenso wie diese leicht vorgefertigt und dann einfach verlegt werden. Bei der Verwendung des erfindungsgemäßen Kabelkanals muß als Brandschutz keine getrennte Verkleidung angebracht werden. Außerdem sind die Elemente relativ handlich, da das intumeszierende Material eine relativ geringe Dicke aufweist und erst durch die chemische Reaktion im Brandfall eine voluminösere Dämmschicht ausbildet. Somit bietet die Erfindung ein leicht zu verlegendes, kostengünstiges, flexibles Kabelkanalsystem, das dennoch einen guten Brandschutz gewährleistet.

Ausführungsbeispiele der Erfindung werden nun anhand der beigefügten Zeichnungen beschrieben. Es zeigen:
- Fig. 1: einen Schnitt durch einen erfindungsgemäßen Kabelkanal mit Deckel und Kabelrinne;
- Fig. 2: eine perspektivische Ansicht von einem Stück der Kabelrinne;
- Fig. 3: eine Detailansicht einer Wand der Kabelrinne;
- Fig. 4: eine Detailansicht des Deckels des Kabelkanals; und
- Fig. 5: eine Detailansicht einer anderen Ausführungsform des Deckels des Kabelkanals.
- Fig. 6: eine perspektivische Ansicht von einem Stück der Kabelrinne mit Deckel nach einem weiteren Ausführungsbeispiel;
- Fig. 7: eine perspektivische Ansicht von einem Stück der Kabelrinne;
- Fig. 8: eine Detailansicht des Deckels des Kabelkanals;
- Fig. 9: eine perspektivische Detailansicht einer abgewandelten Ausführungsform der Kabelrinne von Fig. 7;
- Fig. 10: eine perspektivische Detailansicht einer weiteren abgewandelten Ausführungsform der Kabelrinne von Fig. 7; und
- Fig. 11: eine perspektivische Ansicht einer weiteren abgewandelten Ausführungsform der Kabelrinne von Fig. 7.
- Fig. 12: eine perspektivische Ansicht einer weiteren abgewandelten Ausführungsform der Kabelrinne von Fig. 7.
- Fig. 13: eine perspektivische Ansicht einer weiteren abgewandelten Ausführungsform der Kabelrinne von Fig. 7.
- Fig. 14: eine perspektivische Ansicht einer weiteren abgewandelten Ausführungsform der Kabelrinne von Fig. 7.

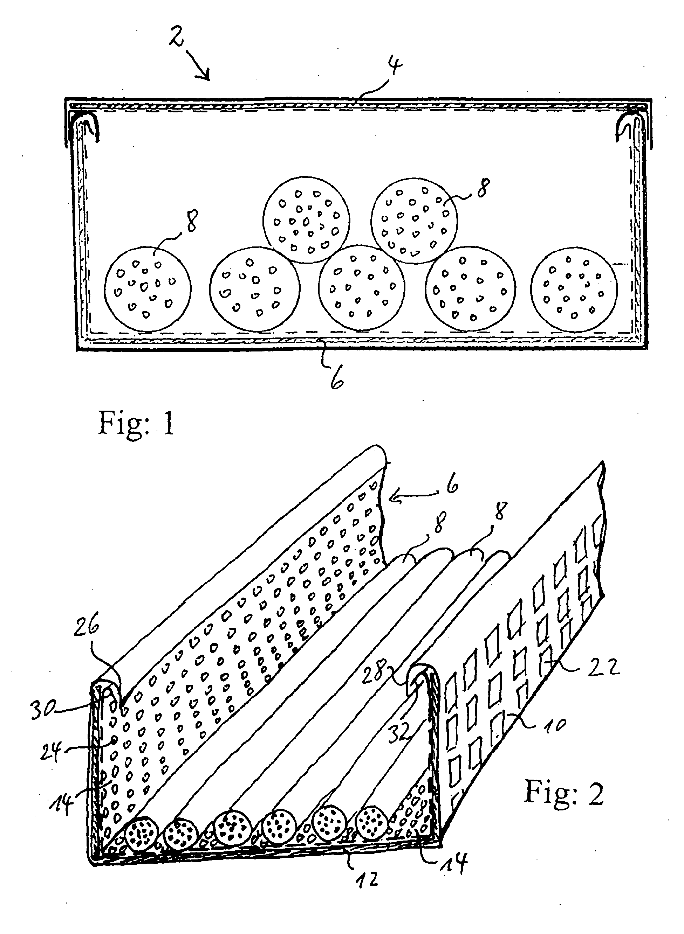

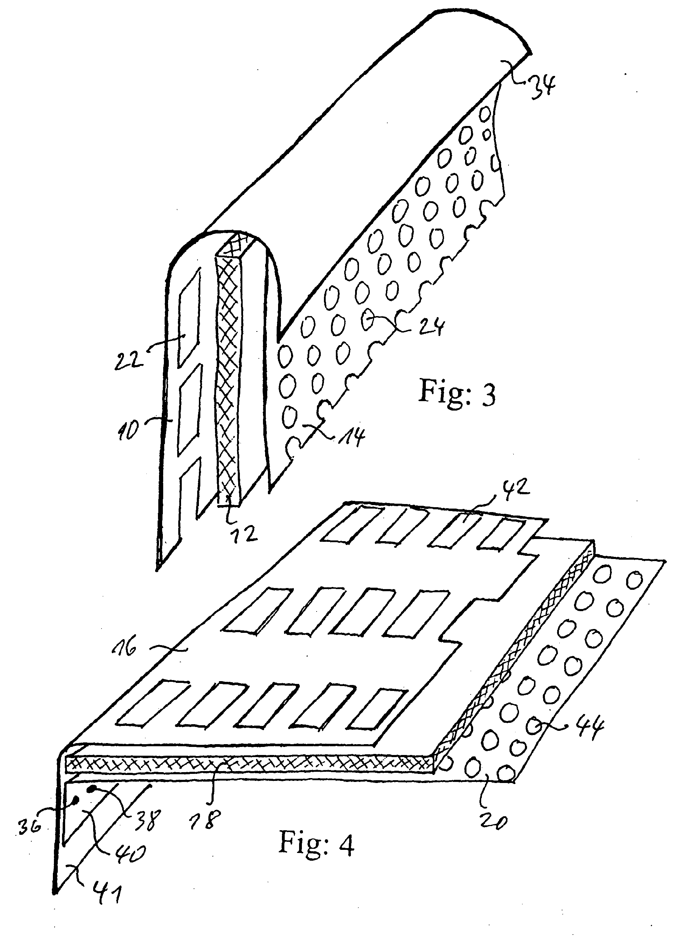

Der in Fig. 1 gezeigte Kabelkanal 2 besteht aus einem Deckel 4 und einer Kabelrinne 6, in der einige Kabel 8 schematisch dargestellt sind. Die Kabelrinne 6 hat eine Außenwand 10 aus Metallblech, eine Brandschutz-Lage 12 aus einem innenseitig von der Außenwand angeordneten, nichtmetallischen, intumeszierenden Brandschutzmaterial und eine innenseitig von der Brandschutz-Lage 12 angeordnete Innenwand 14 aus Metallblech (Figuren 2 und 3). Der mit der Kabelrinne lösbar verbundenen Deckel 4 hat eine Deckel-Außenwand 16 aus Metallblech, eine Brandschutz-Lage 18 aus einem innenseitig von der Außenwand angeordneten, nichtmetallischen, intumeszierenden Brandschutzmaterial und eine innenseitig von der Brandschutz-Lage angeordnete Deckel-Innenwand 20 Metallblech (Figur 4).

Das Metallblech der Außenwand 10 hat großflächige, rechteckige Öffnungen 22 (Figuren 2 und 3). Das Metallblech der Innenwand 14 hat ebenfalls Öffnungen 24, die etwas kleiner als die Öffnungen 22 und rund ausgebildet sind. Die Öffnungen 22 in den Außenwänden 10 und die Öffnungen 24 in den Innenwänden 14 sind so dimensioniert, dass sie beim Aufschäumen des Brandschutzmaterials dieses durchlassen und dann verschlossen werden. Die Brandschutz-Lage 12 hat eine Dicke von bis zu einigen Millimetern und ist zwischen der Außenwand 10 und der Innenwand 14 angeordnet.

Gemäß Figur 2 haben die Außenränder der Außenwand 10 nach innen und unten gebogene Abschnitte 26, 28, und die Innenwand 14 hat ebenfalls an ihren Außenrändern nach innen und unten gebogene Abschnitte 30, 32. Diese Abschnitte 26, 28; 30, 32 dienen als Rastmittel, um die Außenwände und die Innenwände miteinander zu verbinden, wobei die Brandschutz-Lage 12 dazwischen eingeschlossen wird.

Gemäß Figur 3 hat die Außenwand 10 einen nach innen und unten gebogenen Abschnitt 34, und die Innenwand 14 ist an der entsprechenden Oberkante gerade ausgebildet. Bei dieser Ausführungsform kann die Innenwand 14 aufgrund ihrer Flexibilität unter den gebogenen Abschnitt 34 der Außenwand eingerastet werden.

Bei dem Deckel 4 in Figur 4 ist die Deckel-Innenwand 20 mit der Deckel-Außenwand 16 durch Nieten 36, 38 verbunden, die an einem rechtwinklig abgebogenen Abschnitt 40 in der Deckel-Innenwand 20 liegen und diese sowie einen ebenfalls rechtwinklig nach unter gebogenen Abschnitt 41 der Deckel-Außenwand 16 durchdringen. Im übrigen ist die Verbundwand des Deckels 4 ebenso ausgebildet wie die Verbundwand der Kabelrinne 6, das heißt die Deckel-Außenwand 16 hat großflächige, rechteckige Öffnungen 42, die Deckel-Innenwand hat kleinere runde Öffnungen 44, und die Brandschutz-Lage 18 ist zwischen der Deckel-Außenwand 16 und der Deckel-Innenwand 20 angeordnet.

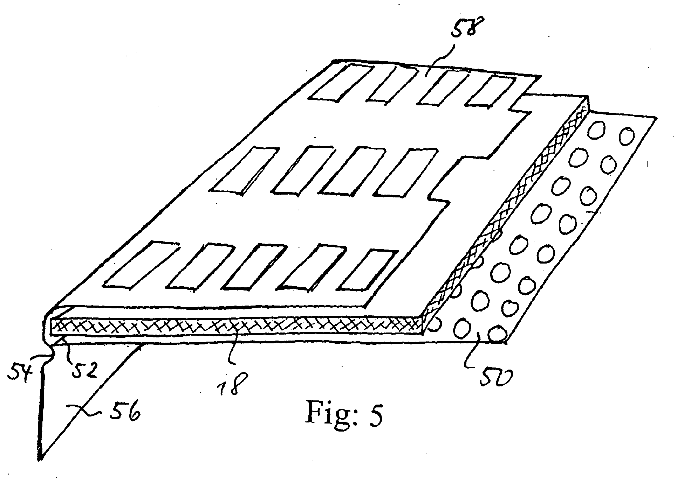

Figur 5 zeigt eine abgewandelte Ausführungsform des Deckels, bei dem die Innenwand 50 mit einem ebenen Rand 52 ausgeführt ist, der hinter eine Rippe 54 an der Deckel-Seitenwand 56 der Außenwand 58 des Deckels einrastbar ist.

Bei dem erfindungsgemäßen Kabelkanal können in vorteilhafter Weise als Brandschutzmittel PALUSOL® Brandschutzplatten der Fa. BASF AG, Ludwigshafen, Deutschland verwendet werden. Diese bestehen im Wesentlichen aus Natriumsilicat, das bei Hitze eine Wirkung unter Blähdruckentwicklung aufschäumt, sowie aus Stapelglasseide. Das wasserhaltige Natriumsilcat schäumt bei Hitzeeinwirkung unter Entwicklung eines hohen Blähdrucks auf, wobei ein feinporiger, druckfester, nicht brennbarer und hitzebeständiger Schaum entsteht. Gleichzeitig setzt eine Wärmebindung durch verdampfendes Wasser ein, wodurch ein zusätzlicher Kühleffekt eintritt.

Insbesondere bestehen PALUSOL® Brandschutzplatten in ihrem Kern aus wasserhaltigem Natriumsilicat und geringen Mengen organischer Zusätze. Sie enthalten ferner Glasfasern und ein Glasgewebe oder ein Drahtnetz. Eine beidseitig aufgebrachte Epoxidharzschicht schützt den Kern vor klimatischen Einflüssen wie Kohlendioxid, Wasser und Wasserdampf. Der Wassergehalt der Platten beträgt, bezogen auf ihr Gesamtgewicht, zwischen 25 bis 40 Gewichtsprozent. Die Kernschicht kann etwa 2 Gewichtsprozent organische Bestandteile enthalten. Die PALUSOL® Brandschutzoplatten eignen sich besonders für die erfindungsgemäße Kabelkanäle und deren Herstellung, weil sie eine genügende Eigenstabilität und Flexibilität haben, so dass der Zusammenbau der Kabelrinne und des Kabeldeckels leicht und problemlos durchgeführt werden kann.

Bei dem erfindungsgemäßen Kabelkanal kann ferner in vorteilhafter Weise als Brandschutzmittel PYROSTAT® UNI der Fa. G + H Isolierung GmbH, Würzburg, Deutschland verwendet werden. Dieses Material besteht im Wesentlichen aus beschichtetem Glagewebe, wobei die Beschichtung aus Acrylat/Polysiloxandispersion besteht.

Bei dem erfindungsgemäßen Kabelkanal kann ferner in vorteilhafter Weise als Brandschutzmittel NOVAFLEX ® der Fa. Hensotherm AB, Trelleborg , Schweden verwendet werden. Dieses Material besteht im Wesentlichen aus Vinylazetat-Mischpolymer-Dispersion auf Wasserbasis mit flammhemmenden Füllstoffen besteht.

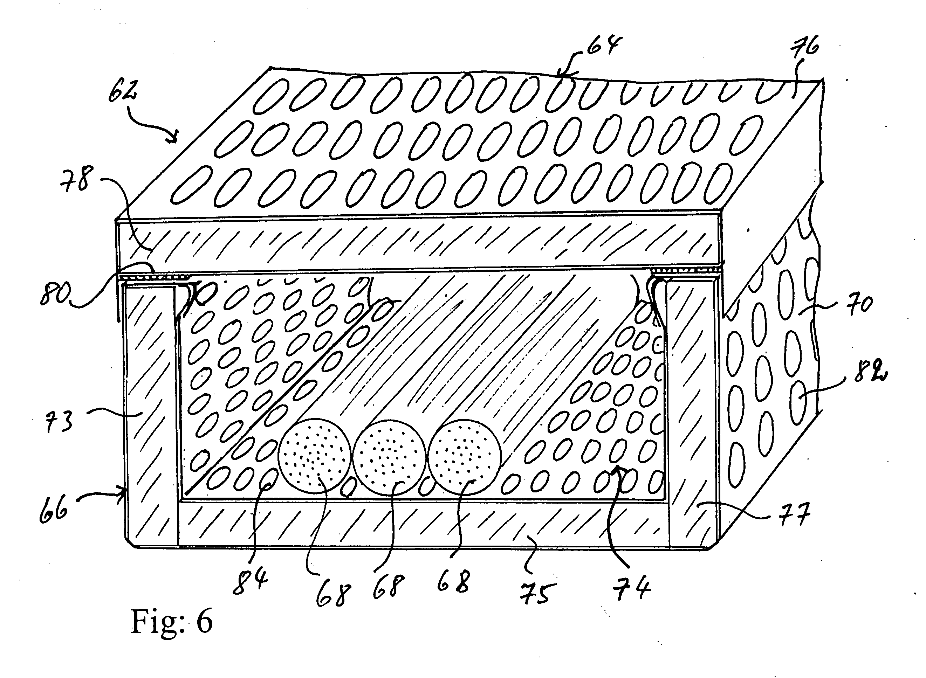

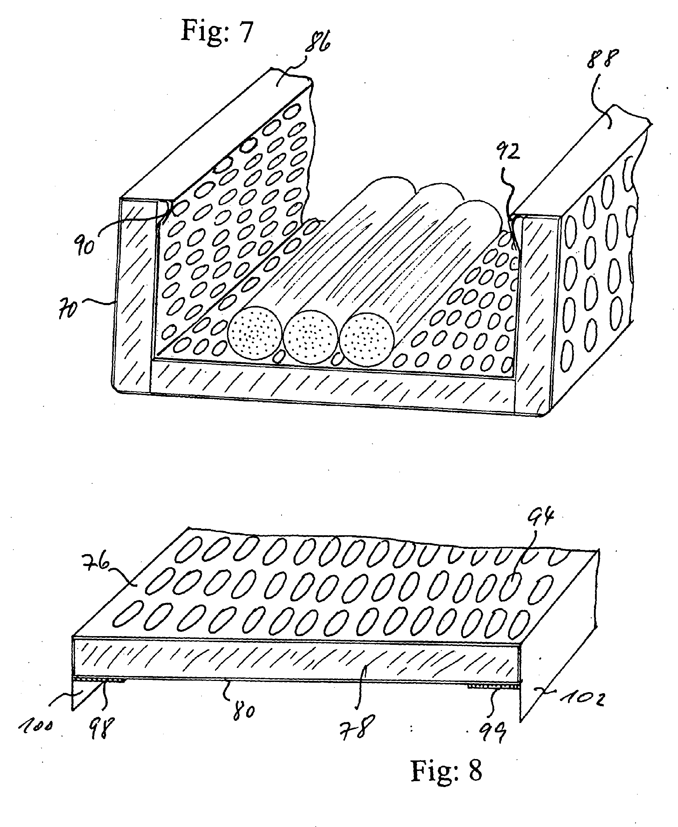

Der in Fig. 6 gezeigte Kabelkanal 62 besteht aus einem Deckel 64 und einer Kabelrinne 66, in der einige Kabel 68 schematisch dargestellt sind. Die Kabelrinne 66 hat eine Außenwand 70 aus Metallblech, eine Brandschutz-Lage 72 aus einem innenseitig von der Außenwand angeordneten, nichtmetallischen, intumeszierenden Brandschutzplatten 73,75,77 und eine innenseitig von den Brandschutzplatten 73,75,77 angeordnete Innenwand 74 aus Metallblech (Figuren 6 und 7). Der mit der Kabelrinne 66 lösbar verbundenen Deckel 64 hat eine Deckel-Außenwand 76 aus Metallblech, eine Brandschutz-Lage 78 aus einem innenseitig von der Außenwand angeordneten, nichtmetallischen, intumeszierenden Brandschutzplatten und eine innenseitig von der Brandschutz-Lage angeordnete Deckel-Innenwand 80 aus Metallblech (Figur 4).

Das Metallblech der Außenwand 70 hat großflächige, rechteckige Öffnungen 82 (Figuren 6 und 7). Das Metallblech der Innenwand 74 hat ebenfalls Öffnungen 84. Die Öffnungen 82 in den Außenwänden 70 und die Öffnungen 84 in den Innenwänden 74 sind so dimensioniert, dass sie beim Aufschäumen des Brandschutzmaterials dieses durchlassen und dann verschlossen werden. Die Brandschutz-Lage 72 hat eine Dicke zwischen einigen Millimetern und einigen Zentimetern.

Gemäß Figur 7 haben die Außenränder der Außenwand 70 nach innen verlaufende Ränder 86, 88, und die Innenwand 74 hat an ihren Außenrändern zuerst nach innen und dann nach außen verlaufende Randsbschnitte 90, 92. Die Ränder 86, 88 bzw. Randabschnitte 90, 92 dienen als Rastmittel, um die Außenwände und die Innenwände miteinander zu verbinden.

Bei dem Deckel 64 in Figur 8 ist die Deckel-Innenwand 80 mit der Deckel-Außenwand 76 verbunden. Im übrigen ist die Verbundwand des Deckels 64 ebenso ausgebildet wie die Verbundwand der Kabelrinne 66, das heißt die Deckel-Außenwand 76 hat großflächige Öffnungen 94, die Deckel-Innenwand hat ebenfalls Öffnungen (nicht gezeigt), und eine Brandschutzplatte 78 ist zwischen der Deckel-Außenwand 76 und der Deckel-Innenwand 80 angeordnet. Der Deckel 64 hat an seiner Innenseite seitliche Dichtungssttraeifen 98, 99, die bei zusammengebautem Kabelkanal an den Rändern 86,88 der Außenwand 70 abdichtend anliegen. Der Deckel 64hat ferner Seitenteile 100, 1002, die in zusammengebautem Zustand des Kabelkanals an der Außenwand 70 der Kabelrinne 66 angreifen.

Bei den Ausführungsbeispielen der Fig. 6 bis 8 besteht das Brandschutzmaterial aus Brandschutzplatten, die lose zwischen den Außenwänden 70 und den Innenwänden 74 eingelegt sind. Das Brandschutzmaterial der Brandschutzplatten besteht vorzugsweise aus PALU-SOL® oder VERMICULITE ® oder Steinfaserplatten mit einer Schmelztemperatur größer oder gleich 1000°C oder Caluzium-Silikat-Platten oder Platten aus einem schaumbildenden Dümmstoff auf Polyurethan-Basis mit Füllstoffen.

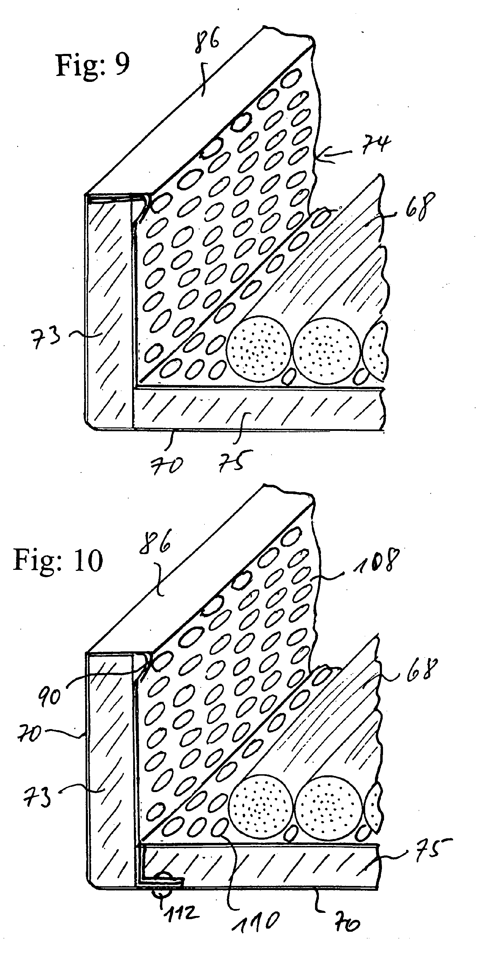

Fig. 9 ist eine perspektivische Detailansicht einer abgewandelten Ausführungsform der Kabelrinne von Fig. 7, indem die Randabschnitte 90, 92 des Ausführungsbeispiels von Fig. 7 nach außen unter den Rand 86 bzw. 88 der Außenwand 70 verlaufenden Randansatz 90 bzw. 92 aufweisen, wobei Schweißungen zwischen dem Rand 86 bzw. 88 der Außenwand 70 und dem Randansatz 90 bzw. 92 der Innenwand 74 angeordnet sind. Dadurch können die Außenwände 70 mit den Innenwänden 74 verbunden sein, was sich aus Gesichtspunkten der einfacheren Montage als vorteilhaft erweist, da dann die verschiedenen Teile des Kabelkanals bei der Montage nicht gegeneinander verrutschen können.

Fig. 10 ist eine perspektivische Detailansicht einer weiteren abgewandelten Ausführungsform der Kabelrinne von Fig. 7. Gemäß Fig. 10 weist die Innenwand des Kabelkanals zwei Seitenwände 108 und eine Bodenwand 110 auf, und die Seitenwände 108 sind in einem Bereich eines zwischen den Seitenwänden und der Bodenwand gebildeten Stoßes mit der Bodenwand 110 und mit der Außenwand 70 verbunden, vorzugsweise durch Nieten 112 oder durch Schweißungen. Einer der zwei Seitenwände 108 der Innenwand kann mit der Bodenwand 110 einstückig sein, was die Montage erleichtert, da weniger Verbindungen zwischen den verschiedenen Bauteilen hergestellt werden müssen.

Bei der Ausführungsform nach Fig. 10 erstrecken sich die Brandschutzplatten z.B. 73, die in den Seiten des Kabelkanals 66 vorgesehen sind, im wesentlichen über die gesamte Länge der Seiten. Die Brandschutzplatten 75, die in dem Boden des Kabelkanals 66 vorgesehen sind, erstrecken sich im wesentlichen zwischen den Brandschutzplatten in den Seiten. Wenigstens eine der zwei Seitenwände 108 der Innenwand 74 ist um die Brandschutzplatte 75 am Boden des Kabelkanals 66 herum geführt und verläuft neben dem Boden des Kabelkanals 66. Die Bodenwand 110 ist an dem Stoß zu der angrenzenden Seitenwand 108 ebenfalls um die Brandschutzplatte 75 am Boden des Kabelkanals 66 herum geführt und verläuft neben dem Boden des Kabelkanals 66. Die Seitenwand 108 und die Bodenwand 110 sind miteinander und mit der Außenwand 74 des Kabelkanals 66 verbunden, was sich auch hier aus Gesichtspunkten der einfacheren Montage als vorteilhaft erweist, da dann die verschiedenen Teile des Kabelkanals bei der Montage nicht gegeneinander verrutschen können.

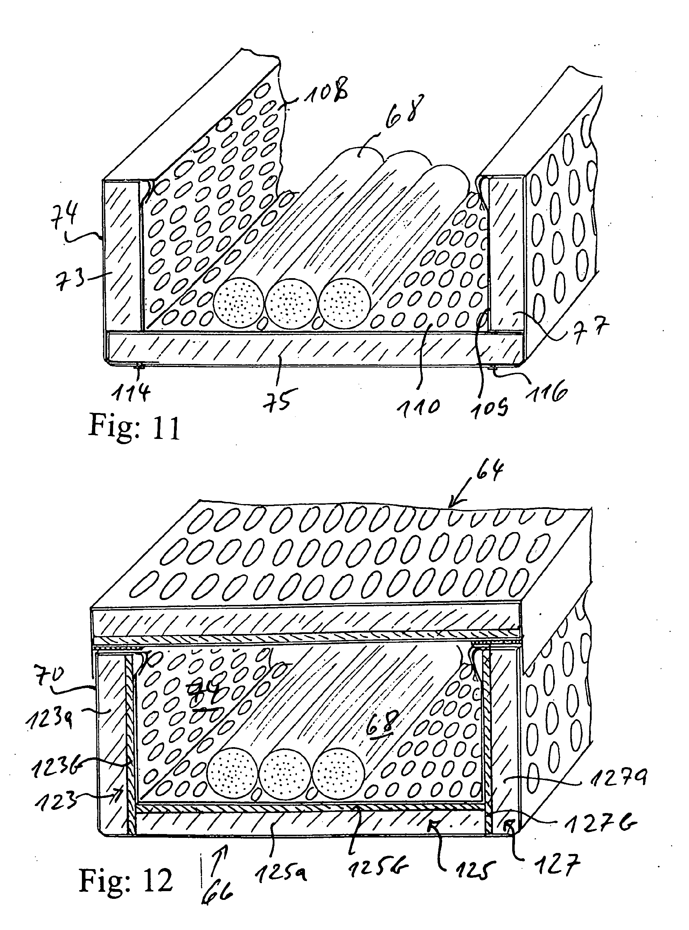

Fig. 11 ist eine perspektivische Detailansicht einer weiteren abgewandelten Ausführungsform der Kabelrinne von Fig. 7. Bei dieser Ausführungsform erstrecken sich die Brandschutzplatte 75, die in dem Boden des Kabelkanals 66 vorgesehen sind, im wesentlichen über die gesamte Länge des Bodens. Die Brandschutzplatten 73,77, die in den Seiten des Kabelkanals 66 vorgesehen sind, erstrecken sich im wesentlichen zwischen der Brandschutzplatte 75 in dem Boden und den gegenüberliegenden Enden der Seiten des Kabelkanals 66. Wenigstens eine der zwei Seitenwände 108, 109 ist um die Brandschutzplatte 75 am Boden des Kabelkanals 66 herum geführt und verläuft neben dem Boden des Kabelkanals 66. Die Bodenwand 110 ist an dem Stoß zu der angrenzenden Seitenwand 108 bzw. 109 ebenfalls um die Brandschutzplatte 75 am Boden des Kabelkanals 66 herum geführt und verläuft neben dem Boden des Kabelkanals 66. Die Seitenwand 108 bzw. 109 und die Bodenwand 110 sind miteinander und mit der Außenwand 74 verbunden, beispielsweise durch Nieten 114, 116, was sich auch hier aus Gesichtspunkten der einfacheren Montage als vorteilhaft erweist, da dann die verschiedenen Teile des Kabelkanals bei der Montage nicht gegeneinander verrutschen können.

Fig. 12 ist eine perspektivische Ansicht einer weiteren abgewandelten Ausführungsform der Kabelrinne von Fig. 7, wobei Brandschutzmaterial Brandschutzplatten 123, 125,127 aufweist, die aus zwei Lagen 123a bzw. 123b; 125a bzw. 125b; 127a bzw. 127b aus im Bezug auf ihr Brandschutzverhalten unterschiedlichen Brandschutzmaterialien bestehen. Die eine Lage ist eine Wärmedämmungs-Lage 123a, 125a, 127a mit hohen Wärmedämmungseigenschaften, vorzugsweise aus Vermiculite oder Steinfaser, und die andere Lage ist eine Schaumbildungs-Lage 123b, 125b, 127b mit hoher Schaumbildung bei Hitzeeinfluß, vorzugsweise aus PALUSOL® oder einem Dämmstoff auf Polyurethan-Basis. Zum Schutz des Kabelkanalinhalts, beispielsweise der Kabel 68, gegen Feuer von außen ist die Wärmedämmungs-Lage 123a, 125a, 127a an der Innenseite der Außenwand 70 des Kabelkanals 66 angeordnet, und die Schaumbildungs-Lage 123b, 125b, 127b ist innerhalb der Wärmedämmungs-Lage 123a, 125a, 127a angeordnet

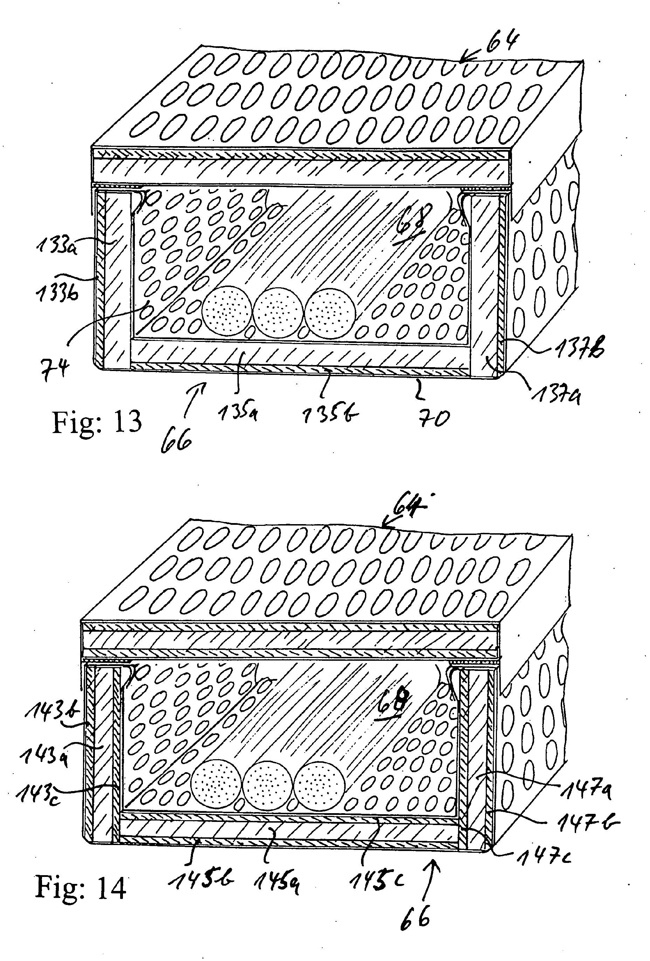

Fig. 13 ist eine perspektivische Ansicht einer weiteren abgewandelten Ausführungsform der Kabelrinne von Fig. 7, wobei Brandschutzmaterial Brandschutzplatten aufweist, die aus zwei Lagen 133a bzw. 133b; 135a bzw. 135b; 137a bzw. 137b aus im Bezug auf ihr Brandschutzverhalten unterschiedlichen Brandschutzmaterialien bestehen. Die eine Lage ist eine Wärmedämmungs-Lage 133a, 135a, 137a, vorzugsweise aus Vermiculite oder Steinfaser, und die andere Lage ist eine Schaumbildungs-Lage 133b, 135b, 137b mit hoher Schaumbildung bei Hitzeeinfluß, vorzugsweise aus PALUSOL® oder einem Dämmstoff auf Polyurethan-Basis. Zum Schutz des Kabelkanalinhalts, beispielsweise der Kabel 68, gegen Feuer von innen ist die Wärmedämmungs-Lage 133a, 135a, 137a an der Außenseite der Innenwand des Kabelkanals angeordnet, und die Schaumbildungs-Lage 133b, 135b, 137b ist außerhalb der Wärmedämmungs-Lage 133a, 135a, 137a angeordnet.

Fig. 14 ist eine perspektivische Ansicht einer weiteren abgewandelten Ausführungsform der Kabelrinne von Fig. 7, wobei Brandschutzmaterial Brandschutzplatten aufweist, die aus drei Lagen aus im Bezug auf ihr Brandschutzverhalten unterschiedlichen Brandschutzmaterialien bestehen, wobei eine Wärmedämmungs-Lage 143a, 145a, 147a mit hohen Wärmedämmungseigenschaften zwischen zwei Schaumbildungs-Lagen 143b, 143c, 145b, 145c, 147b, 147c mit hoher Schaumbildung bei Hitzeeinfluß angeordnet ist.

Der Kabelkanal nach den Ausführungsbeispielen der Erfindung läßt sich auf einfache Weise dadurch herstellen, daß Verfahren zur Herstellung eines Kabelkanals, dadurch gekennzeichnet, daß eine Außenwand aus mit Öffnungen versehenem Metallblech gefertigt wird, daß eine Brandschutz-Lage aus einem nichtmetallischen intumeszierendem Brandschutzmaterial die Metalleinlage innenseitig von der Außenwand angeordnet wird, daß eine Innenwand aus mit Öffnungen versehenem Metallblech innenseitig von der Brandschutz-Lage angeordnet wird, und daß der Kabelkanal durch Verbinden der Außenwände mit den Innenwänden fertig gestellt wird. Wenn als Brandschutz-Lage PALUSOL® Brandschutzplatten verwendet werden, werden diese zwischen den Außenwänden und den Innenwänden lose eingelegt. Wenn als Brandschutz-Lage PYROSTAT® UNI verwendet wird, kann das beschichtete Glagewebe zwischen den Außenwänden und den Innenwänden lose eingelegt. Der Kabelkanal wird durch Zusammenfügen der Außenwände und der Innenwände in Sandwich-Bauweise hergestellt, wobei die Brandschutz-Lage quasi eine Sandwich-Einlage aus intumeszierendem Material bildet. Die Außenwände können einfach mit den Innenwänden über eine Verrastung der Außenwände mit den Innenwänden verbunden werden.

Die Erfindung ist nicht auf die gezeigten Ausführungsbeispiele beschränkt. So können beispielsweise die Brandschutz-Lagen der Ausführungsbeispiele untereinander ausgetauscht werden, wobei beispielsweise die Kabelkanäle der Figuren 6 bis 11 mit den Brandschutzplatten der Figuren 12 bis 14 ausgestattet werden. Auch die Brandschutzmaterialien sind nicht auf die namentlich genannten Materialien beschränkt, wobei andere Materialien eingesetzt werden können, die den jeweils erkennbaren Zweck erfüllen.

## Patentansprüche

1. Brandgeschützter Kabelkanal, der eine Kabelrinne (6,66) und gegebenenfalls einen Deckel (4,64) umfasst, **dadurch gekennzeichnet, daß** wenigstens die Kabelrinne (6,66) eine Außenwand (10,70) aus mit Öffnungen (22) versehenem Metallblech, eine Brandschutz-Lage (12,72) aus einem innenseitig von der Außenwand (10,70) angeordneten, nichtmetallischen Brandschutzmaterial und eine innenseitig von der Brandschutz-Lage angeordnete Innenwand (14,74) aus mit Öffnungen (24) versehenem Metallblech aufweist.

2. Kabelkanal mit Kabelrinne und Deckel nach Anspruch 1, **dadurch gekennzeichnet, daß** der mit der Kabelrinne (6,66) lösbar verbundenen Deckel (4,64) eine Deckel-Außenwand (16, 58,76) aus mit Öffnungen (42) versehenem Metallblech, eine Brandschutz-Lage (18,78) aus einem innenseitig von der Deckel-Außenwand (16, 58,76) angeordneten, nichtmetallischen Brandschutz-material und eine innenseitig von der Brandschutz-Lage (18,78) angeordnete Deckel-Innenwand (20, 50,80) aus mit Öffnungen (44) versehenem Metallblech aufweist.

3. Kabelkanal nach Anspruch 1, **dadurch gekennzeichnet, daß** die Außenwand (10,70) der Kabelrinne (6,66) als tragendes Element für den Kabelkanal ausgeführt ist, während die Innenwand (14,74) als Abriebschutz für das Brandschutzmaterial vorgesehen ist.

4. Kabelkanal nach einem der Ansprüche 1 bis 3, **dadurch gekennzeichnet, daß** Brandschutzmaterial in Form des Glasgewebes lose zwischen den Außenwänden (10; 16, 58) und den Innenwänden (14; 20, 50) eingelegt ist.

5. Kabelkanal nach einem der Ansprüche 1 bis 3, **dadurch gekennzeichnet, daß** das Brandschutzmaterial Brandschutzplatten aufweist, die aus wenigstens zwei Lagen aus im Bezug auf ihr Brandschutzverhalten unterschiedlichen Brandschutzmaterialien bestehen.

6. Kabelkanal nach Anspruch 5, **dadurch gekennzeichnet, daß** die Brandschutzplatten aus zwei Lagen (123a bzw. 123b; 125a bzw. 125b; 127a bzw. 127b) aus im Bezug auf ihr Brandschutzverhalten unterschiedlichen Brandschutzmaterialien bestehen, wobei wenigstens eine Wärmedämmungs-Lage (123a,125a,127a) mit hohen Wärmedämmungseigenschaften, vorzugsweise aus Vermiculite oder Steinfaser, und wenigstens eine Schaumbildungs-Lage (123b,125b,127b) mit hoher Schaumbildung bei Hitzeeinfluß, vorzugsweise aus PALUSOL® oder einem Dämmstoff auf Polyurethan-Basis, vorgesehen ist.

7. Kabelkanal nach Anspruch 6, **dadurch gekennzeichnet, daß** zum Schutz des Kabelkanalinhalts gegen Feuer von außen die Wärmedämmungs-Lage (123a,125a,127a) an der Innenseite der Außenwand (70) des Kabelkanals und die Schaumbildungs-Lage (123b,125b,127b) innerhalb der Wärmedämmungs-Lage angeordnet ist, oder dass zum Schutz des Kabelkanalinhalts gegen Feuer von innen die Wärmedämmungs-Lage (123a,125a,127a) an der Außenseite der Innenwand des Kabelkanals und die Schaumbildungs-Lage (123b,125b,127b) außerhalb der Wärmedämmungs-Lage (123a,125a,127a) angeordnet ist.

8. Kabelkanal nach Anspruch 5, **dadurch gekennzeichnet, daß** die Brandschutzplatten aus drei Lagen aus im Bezug auf ihr Brandschutzverhalten unterschiedlichen Brandschutzmaterialien bestehen, wobei eine Wärmedämmungs-Lage (143a,145a,147a) zwischen zwei Schaumbildungs-Lagen (143b, 143c, 145b, 145c, 147b,147c) mit hoher Schaumbildung bei Hitzeeinfluß angeordnet ist.

9. Kabelkanal nach einem der vorhergehenden Ansprüche, **dadurch gekennzeichnet, daß** die Außenwände (10; 16, 58;70) vorzugsweise durch Rastmittel, Schweißungen oder Nieten mit den Innenwänden (14; 20, 50;74) verbunden sind.

10. Kabelkanal nach einem der vorhergehenden Ansprüche, **dadurch gekennzeichnet, daß** die Innenwand (74) zwei Seitenwände (108,109) und eine Bodenwand (110) aufweisen, und dass die Seitenwände (108,109) in einem Bereich eines zwischen den Seitenwänden (108,109) und der Bodenwand (110) gebildeten Stoßes mit der Bodenwand (110) und mit der Außenwand (70) verbunden, vorzugsweise vernietet oder verschweißt sind.

11. Kabelkanal nach einem der vorhergehenden Ansprüche, **dadurch gekennzeichnet, daß** die Öffnungen in den Außenwänden (14; 20, 50) und in den Innenwänden (14; 20, 50) so dimensioniert sind, daß sie beim Aufschäumen des Brandschutzmaterials den Schaum austreten lassen.
